# EUROPÄISCHE PATENTSCHRIFT

(11) **EP 0 530 826 B1**
(45) Veröffentlichungstag und Bekanntmachung des Hinweises auf die Patenterteilung: **03.01.1996**
(21) Anmeldenummer: 92115171.8
(22) Anmeldetag: 04.09.1992
(51) Int. Cl.: C05F 3/00

(54) **Verfahren zum Entwässern von Flüssigschlamm und Verwendung des entwässerten Schlammkonzentrats als Bodenverbesserer und Düngemittel**
Process for dewatering of sludge and use of the dewatered concentrated product as soil improver and fertiliser
Procédé de déshydratation de boues et application des boues ainsi concentrées comme engrais et amendement pour sols

(30) Priorität: 06.09.1991 DE 4129641
(43) Veröffentlichungstag der Anmeldung: 10.03.1993
(73) Patentinhaber: NALVA UMWELTTECHNIK GmbH, D-61348 Bad Homburg (DE)
(72) Erfinder: Lehmkul, Josef, W-6380 Bad Homburg v.d.H. (DE)
(74) Vertreter: Ruschke, Olaf

(56) Entgegenhaltungen:
- DATABASE WPI Section Ch, Week 7830, Derwent Publications Ltd., London, GB; Class D04, AN 78-54109A
- CHEMICAL ABSTRACTS, vol. 81, no. 17, 28. Oktober 1974, Columbus, Ohio, US; abstract no. 103943, YOSHINO, YOSHIMATSU 'fermentation waste fertilizers' Seite 405

## Beschreibung

Die Erfindung betrifft ein neues und außerordentlich wirksames Verfahren zur Entwässerung von Flüssigschlämmen und gleichzeitigen Fällung der Ammoniumgehalte in diesen Flüssigschlämmen durch direkte Behandlung des Schlammes mit chemischen Fällungszusätzen. Sie betrifft insbesondere ein ökonomisches Verfahren zur Klärschlammentwässerung, bei dem gleichzeitig dessen Ammoniumgehalte in Form von Magnesiumammoniumphosphat ausgefällt werden. Der dabei erhaltene entwässerte Schlamm mit erhöhtem Nährstoffangebot kann als Bodenverbesserer und als Düngemittel verwendet werden, während das erhaltene Filtrat mit verminderter Nährstofffracht in eine Kläranlage eingeleitet und zur weiteren Fällung von Ammonium nach dem CAFR-Verfahren behandelt werden kann.

Unter einem (Flüssig) Schlamm versteht man im allgemeinen ein System aus Flüssigkeit (meistens Wasser), in dem vorwiegend hydrophile Feststoffteilchen, die gegebenenfalls auch kolloidaler Natur sein können, feinverteilt sind. Stickstoffverbindungen enthaltende Schlämme fallen in unterschiedlichen Kategorien in großen Mengen an, insbesondere Klärschlämme, Gülleschlämme, Faulschlämme, Belebtschlämme, Treber, Vinasse und dgl.

Das Klärschlammaufkommen in der (alten) Bundesrepublik erreicht jährlich ca. 19 Mio to, wobei die Trockenmasse ca. 1,8 Mio to ausmacht. Der Stickstoff in Klärschlämmen liegt meistens zu mehr als 90 % in der Ammoniumform vor. Auch durch Gülle wird ein erheblicher Stickstoffgehalt in Form von Ammoniumverbindungen erzeugt. Die chemische Entsorgung dieser riesigen Mengen Ammoniumstickstoff hat in der letzten Zeit zunehmend Aufmerksamkeit gefunden.

Die Klärschlammentsorgung ist heute eine der wichtigsten Umweltschutzmaßnahmen, wobei an sich drei Möglichkeiten in Betracht kommen:
(1) Die Verbringung in die Landwirtschaft.
(2) Die Verfestigung und Deponierung.
(3) Die Klärschlammverbrennung.

Dabei ist die Deponierung die schlechteste Lösung, weil Deponieraum immer knapper und teurer wird, Eine problematische Lösung ist aber auch die Verbringung in die Landwirtschaft, weil einerseits Schwermetall-Verunreinigungen ein limitierender Faktor sind und andererseits die Überdüngung durch zu schnellen Ammonium-Eintrag erhebliche Nachteile in sich birgt. Klärschlamm enthält etwa 200 bis zu mehr als 1.000 mg Ammonium/Liter in gelöster Form. Bei der landwirtschaftlichen Verwertung des Klärschlamms wird dieses Ammonium sehr schnell an den Boden abgegeben, so daß es nicht schnell genug von einer Pflanze umgesetzt werden kann und sich durch Oxidationsvorgänge aus NH₄ Nitrat bildet, das zu einer erheblichen Grundwasserbelastung geworden ist.

Bis vor einigen Jahren galt die Klärschlammverbrennung mit der größtmöglichen Volumenreduzierung als optimale Entsorgungsmöglichkeit. Inzwischen weiß man aber, daß auch die Klärschlammverbrennung Nachteile hat, insbesondere im Hinblick auf die Emissionen, z.B. die CO₂-Entwicklung (Treibhaus-Effekt) oder die Dioxinbildung.

Gewisse Tendenzen führen heute wieder verstärkt zu einer landwirtschaftlichen Nutzung des Klärschlamms, wobei jedoch auf eine Veredelung dieses Abfallprodukts hingearbeitet werden muß.

Stand der Technik bei der Klärschlammentwässerung ist die verbesserte Entwässerung durch Konditionierung mit Hilfe von Kalkhydrat und/oder Hydroxid-Bildnern wie Eisenchlorid/sulfat bzw. Aluminiumchlorid/sulfat. Der Einsatz von Kalk bewirkt eine pH-Wert-Erhöhung und gleichzeitige Verfestigung. Da sich jedoch in der Regel der pH-Wert auf über 12 erhöht, werden aus dem alkalischen Milieu beträchtliche Mengen Ammoniak freigesetzt. Die Alkalisierung des Klärschlamms durch Kalk wird in einigen Fällen von der Landwirtschaft gewünscht, wenn saure Böden zu bewirtschaften sind. An anderen Stellen ist jedoch die hohe Alkalität unerwünscht.

Bei einem aus der DE-OS 37 32 896 bekannten Verfahren zur Eliminierung von Ammonium und Phosphat aus Abwasser oder Prozeßwasser wird von der aus der analytischen anorganischen Chemie bekannten Magnesiumammoniumphosphat-Fällung Gebrauch gemacht, wobei ein pH-Wert zwischen 7 und 10 eingestellt und durch Zugabe von Magnesiumsalz und/oder Magnesiumoxid Ammonium und Phosphat als Magnesiumammoniumphosphat ausgefällt werden, das als MgNH₄PO₄ . 6 H₂O auskristallisiert und abgetrennt wird.

Aus DATA Base WP I, Sektion Ch, Week 7830, AN 78-54109A und JP-A-53-067959 ist ein ähnliches Verfahren bekannt, bei dem der wäßrige Überstand der anaeroben Digerierung und der wäßrige Abstrom aus der aeroben Behandlung einer Kläranlage, die große Mengen an Ammoniak-Stickstoff und Phosphorsäure enthalten, bei einem alkalischen pH-Wert von 9 bis 10 mit einer Magnesiumverbindung oder einer Kombination aus einer Magnesiumverbindung und Phosphorsäure behandelt wird. Die aus der Lösung ausgefällten Ammonium- und Phosphorgehalte werden zusammen mit BOD-Komponenten als Feststoff abgetrennt und die verbleibende Lösung wird einer biologischen Behandlung (Aktivschlamm-Verfahren) unterworfen.

Charakteristisch für diese bekannten Verfahren ist, daß sie in mehreren Stufen durchgeführt werden, wobei im wesentlichen zuerst Phosphorsäure vorgelegt und anschließend Magnesiumsalze sowie Natronlauge zur Einstellung des pH-Wertes zugegeben werden. Diese Arbeitsweise hat jedoch verschiedene verfahrenstechnische Nachteile und der dabei ablaufende chemische Fällungsmechanismus ist nicht optimal. Durch Ansäuern mit Phosphorsäure und die spätere Anhebung des pH-Wertes werden verschiedene pH-Wert-Stufen durchlaufen, so daß nicht nur Magnesiumammoniumphosphat, sondern auch andere Magnesium- und Calciumsalze, insbesondere Phosphate und Carbonate, gebildet werden. Die Ammonium-Eliminierung ist dabei sehr unbefriedigend. Auch sind die eingesetzten Fällungsmittelmengen und die Kosten verhältnismäßig hoch. Bei Massenfrachten, wie sie bei Flüssigschlämmen mit höherem Feststoffanteil vorliegen, ist das Arbeiten bei zwei unterschiedlichen pH-Werten noch problematischer.

In der noch unveröffentlichten deutschen Patentanmeldung P 40 40 067.0 wird ein demgegenüber verbessertes Verfahren zur chemischen Fällung von Ammonium aus Abwasser und anschließenden Rückgewinnung beschrieben (CAFR-Verfahren). Für die Fällung des Ammoniums als Magnesiumammoniumphosphat-hexahydrat wird dabei bevorzugt eine stabilisierte Magnesiumhydrogenphospht-Lösung hoher Fällungsaktivität eingesetzt. Durch gleichzeitige Zugabe des Fällungsmittels und von Natronlauge wird ein konstanter optimaler pH-Wert von ca. 9,0 eingestellt. Unter diesen Bedingungen wird eine Ammonium-Eliminierung von 95 bis 99 % erzielt.

Da die Fällung des kristallinen Magnesiumammoniumphosphats spontan erfolgt, kann bei diesem Verfahren mit sehr kurzen Verweilzeiten gearbeitet werden. Bei der praktischen Durchführung des Verfahrens arbeitet man im wesentlichen mit den folgenden Verfahrensschritten: (1) Feststoff-Vorabscheidung mit einem Polyelektrolyten; (2) Fällungsreaktion: (3) Kristallisatabscheidung; und (4) statische Entwässerung. Ein wesentlicher Vorteil dieses Verfahrens besteht darin, daß mit relativ niedrigen Investitionen (Behälter, Dosierpumpen) im Durchlaufverfahren eine fast quantitative chemische Fällung von Ammonium ermöglicht wird. Beispielsweise werden 5 m³ Filtratabwasser pro Stunde mit einem Ammoniumgehalt von ca. 1000 mg Ammoniumstickstoff/Liter behandelt. Das ammoniumreiche Filtrat entsteht nach der thermischen Schlammkonditionierung und anschließenden Entwässerung in einer kommunalen Kläranlage. Die unmittelbare Ammoniumfällung innerhalb des unfiltrierten Klärschlamms ist dabei jedoch nicht in Betracht gezogen worden.

In einem Abwasser ist der Anteil der Sink- und Schwebestoffe naturgemäß begrenzt; 150 l Haushaltsabwasser enthalten ca. 60 g Sinkstoffe, 30 g Schwebstoffe und ca. 100 g gelöste Stoffe. Bei Flüssig(Schlämmen) mit einem höheren Feststoffanteil (von mehr als 1 Gew.-% und meistens mehr als 2 Gew.-%, manchmal sogar mehr als 12 Gew.-%) liegen die Fällungskonditionen aber anders und sind im allgemeinen viel komplexer, so daß Rückschlüsse über die Gängigkeit bei Abwasser und Industriewasser auf Flüssigschlämme kaum möglich ist. Die Wirtschaftlichkeit des vorstehend skizzierten Verfahrens wird aber erst dadurch erreicht, daß gleichzeitig ein Weg für die Nutzung des Fällungsproduktes Magnesiumammoniumphosphat beschritten wird, bei dem aus dem Fällungsprodukt der Wertstoff Ammoniak (als wäßrige Lösung) gewonnen und das Fällungsreagens Magnesiumhydrogenphosphat regeneriert wird. Die Ammoniaklösung findet Einsatz nicht nur für die Düngemittelherstellung, sondern auch in Kraftwerken bei der Verbrennung fossiler Brennstoffe, wodurch die umweltbelastenden Stickoxide eliminiert werden können.

Der Erfindung liegt die Aufgabe zugrunde, ein technisch einfaches und wirksames Verfahren zu entwickeln, mit dem die Ammoniumgehalte eines Flüssigschlamms direkt und unmittelbar aus der Flüssigschlammphase ausgefällt werden können, wobei gleichzeitig eine Verbesserung des Entwässerungsverhaltens des Flüssigschlamms angestrebt wird.

Zur Lösung dieser Aufgabe wird erfindungsgemäß vorgeschlagen, die Entwässerung von Flüssigschlamm unter gleichzeitiger direkter Behandlung des Schlamms mit Fällungszusätzen vorzunehmen, die mindestens eine Magnesiumverbindung und erforderlichenfalls ein oder mehrere Phosphate enthalten. Durch diese Konditionierung werden die Ammoniumgehalte teilweise oder weitgehend als Magnesiumammoniumphosphat ausgefällt. Der so vorkonditionierte Schlamm wird dann auf einem Entwässerungsaggregat entwässert. Aus der Entwässerungseinrichtung, die vorzugsweise eine Kammerfilterpresse, ein Vakuumfilter, eine Siebbandpresse, eine Zentrifuge oder ein Hydrozyklon ist, werden ein Filtrat mit verminderter Nährstoff-Fracht und ein entwässertes Schlammaggregat mit erhöhtem Nährstoffangebot abgezogen. Das Filtrat wird einer Kläranlage zugeführt und kann zur weiteren Fällung von Ammonium nach dem CAFR-Verfahren behandelt werden.

Gegenstand der Erfindung ist gemäß einem ersten Aspekt ein Verfahren
zur gleichzeitigen Ammoniumfällung und Entwässerung von Flüssigschlamm durch Behandlung des Schlammes mit Fällungszusätzen, das dadurch gekennzeichnet ist, daß der Schlamm durch direkte Zugabe eines Fällungszusatzes, der eine oder mehrere Magnesiumverbindungen sowie erforderlichenfalls ein oder mehrere Phosphate enthält, konditioniert wird unter Ausfällung der Ammoniumgehalte in Form von Magnesiumammoniumphosphat, und daß der so konditionierte Schlamm auf einem Entwässerungsaggregat entwässert wird unter Bildung eines Filtrats mit verminderter Nährstofffracht, das in eine Kläranlage eingeleitet wird, und eines entwässerten Schlammes mit erhöhtem Nährstoffangebot, der abgezogen wird.

Bevorzugte Ausgestaltungen des erfindungsgemäßen Verfahrens ergeben sich aus den Unteransprüchen 2 bis 23.

Gemäß einem zweiten Aspekt betrifft die Erfindung die Verwendung des nach dem vorstehend beschriebenen Verfahren erhaltenen Flüssigschlamm-Konzentrats als Bodenverbesserer sowie als Düngemittel, gegebenenfalls unter Anreicherung mit zusätzlichen Magnesium- und/oder Kalium-Düngemittelkomponenten.

Überraschenderweise wurde gefunden, daß das Milieu eines alkalisierten Flüssigschlamms besonders günstige Bedingungen für die Fällung und Kristallisation von MgNH₄PO₄ schafft. Mit dieser Fällungsreaktion geht gleichzeitig eine Verbesserung der Entwässerung infolge einer vorteilhaften Stützgerüstbildung in dem Flüssigschlammaggregat einher. Fällung und Entwässerung beeinflussen sich somit gegenseitig synergetisch. Im Ergebnis wird ein Entwässerungsfiltrat mit deutlich verminderter Ammonium- und Phosphatfracht erhalten, während der entwässerte Schlamm durch die mitgefällten Magnesiumammoniumphosphat-Verbindungen und wegen des dadurch erhöhten Nährstoffangebots eine deutliche Aufwertung erfährt. Das Entwässerungsfiltrat wird zu einer Kläranlage geleitet.

Das Wesen der Erfindung besteht somit in einer simultanen Ammoniumfällung, einer völlig neuen Konzeption, die Schlammkonditionierung mit Ammoniumfällung verknüpft. Zur Schlammkonditionierung wird bevorzugt Magnesia (MgO) eingesetzt. Magnesia hat ähnliche, teilweise jedoch günstigere Eigenschaften als Branntkalk (CaO), wird genauso gelagert und dosiert. Es alkalisiert jedoch etwas schwächer, ist weniger ätzend und vermag Ammonium zu binden. Diese letztgenannten Eigenschaften favorisieren den Einsatz von MgO in dem erfindungsgemäßen Verfahren. Mit Magphos-20®, einer stabilisierten Magnesiumhydrogenphosphat-Lösung (enthält ca. 4 Gew.-% Mg und ca. 15 Gew.-% P) wird deshalb ohne zusätzliche pH-Korrektur Magnesiumammoniumphosphat gebildet. Die Technik des erfindungsgemäßen Verfahrens ist somit sehr einfach und effektiv, zumal alle Installationen der Kalk-Eisen-Konditionierung genutzt werden können. Zusätzlich stellen sich folgende Vorteile ein:
(1) keine Ammoniakgas-Entwicklung
(2) weniger Konditionierungsfeststoff im Filterkuchen
(3) Filterkuchen wird aufgewertet und daher landwirtschaftlich besser nutzbar
(4) Ammoniumreduzierung im Filtrat
(5) niedrigerer pH-Wert im Filtrat und Eluat.

Als Flüssigschlamm werden erfindungsgemäß die eingangs genannten Systeme verstanden, die mit Ammoniumgehalten befrachtet sind. Ihr Feststoffgehalt liegt meistens höher als 1 Gew.-%, vielfach auch über 2 Gew.-%. Schlämme mit 5 Gew.-% und höher, z.B. 8 Gew.-% oder 10 Gew.-% sind möglich. Im allgemeinen arbeitet das erfindungsgemäße Verfahren besonders gut bei Gehalten von 2 bis 10 Gew.-%. Spezielle Anwendung findet das Verfahren bei Klärschlämmen und Gülleschlämmen. Treber- und Vinasseschlämme sind Aggregate aus der Biotechnologie, deren Ammoniumgehalte bei der praktischen Weiterverarbeitung stören können. Hervorragende Bedeutung hat das erfindungsgemäße Verfahren jedoch bezüglich der simultanen Ammoniumfällung im Klärschlamm. Die folgenden Beispiele erläutern deshalb diesen besonderen Erfindungsaspekt.

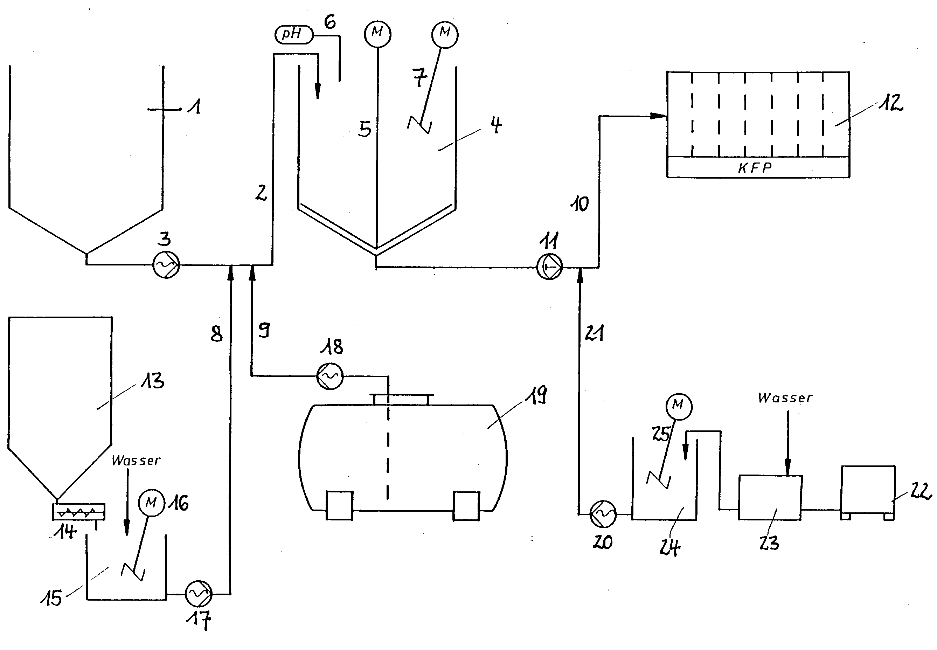

In der Zeichnung ist ein Verfahrensschema zur simultanen Ammoniumfällung bei der Flüssigschlammentwässerung über eine Kammerfilterpresse wiedergegeben. Der Flüssigschlamm aus einer Schlamm-Vorlage 1 wird über eine Leitung 2 mittels einer Schlammpumpe 3 in einen Reaktor 4 gepumpt, der mit einem motorbetriebenen M Mischorgan 5, pH-Meßvorrichtung 6 und Rührmischer 7 ausgerüstet ist. Auf dem Weg zum Reaktor 4 wird der Schlamm über Leitung 8 mit einer MgO-Aufschlämmung und über Leitung 9 mit einer Magnesiumhydrogenphosphat-Lösung versetzt, so daß im Reaktor 4 Mgnesiumammoniumphosphat ausgefällt werden kann, das zusammen mit dem Schlamm über Leitung 10 zur Kammerfilterpresse 12 mittels Pumpe 11 gepumpt wird. Die MgO-Aufschlämmung wird mit dem aus dem MgO-Silo 13 mittels Förderschnecke 14 entnommenen Magnesiumoxid in dem mit Rührwerk 16 ausgerüsteten Behälter 15 mit Wasser angesetzt und über die Pumpe 17 und Leitung 8 zugeleitet. Die Magnesiumhydrogenphosphat-Lösung (Magphos 20) wird mittels Pumpe 18 aus einem Containment 19 entnommen. Die Flockungsmittelzugabe erfolgt über Pumpe 20 und Leitung 21 in die Leitung 10. Aus dem Vorratsbehälter 22 für Flüssigpolymer (z.B. Nalco 41-32) wird in einem Mischer 23 (Optimer) und mit Rührwerk 25 ausgerüstetem Mischgefäß 24 durch Phaseninversion eine verdünnte stabilisierte Polyelektrolytlösung hergestellt, die zum Schlamm zudosiert wird.

Das erfindungsgemäße Verfahren setzt dem Flüssigschlamm mindestens eine Magnesiumverbindung zu, wobei Magnesiumoxid und/oder Magnesiumhydroxid besondere Vorteile haben, da sie gleichzeitig als Alkalisierungsmittel dienen und es ermöglichen, ohne Laugenzufuhr den zur Fällung von Magnesiumammoniumphosphat günstigsten pH-Wert einzustellen. Statt der bisherigen Hydroxidbildner auf der Basis von Eisen- bzw. Aluminiumsalzen wird vorzugsweise eine Magnesiumhydrogenphosphat-Lösung verwendet. Die gelösten Ammoniumionen können mit den zugegebenen Magnesium- und Phosphationen zu Magnesiumammoniumphosphat (Hexahydrat) reagieren. Der gelöste Nährstoff Ammonium wird somit kristallin in den Schlamm eingebunden. Bei der späteren Ausbringung in die Landwirtschaft lost sich Magnesiumammoniumphosphat nur langsam auf, so daß Ammonium als Nährstoff für die Pflanze voll genutzt werden kann, ohne als Nitrat den Wasserhaushalt zu schädigen.

Wenn der Flüssigschlamm bereits eine beachtliche Phosphatfracht aufweist, kann dieser Phosphatgehalt für die Ammoniumfällung genutzt werden. Im allgemeinen enthält jedoch der Zusatz eine oder mehrere Phosphatverbindungen. Besonders bevorzugt ist das Phosphat eine Magnesiumphosphatverbindung, da sich hierdurch der Grad der Ammoniumfällung leichter steuern läßt. Geeignete Magnesiumphosphatverbindungen sind Magnesiumtetrahydrogenphosphat MgH₄(PO₄)₂, Magnesiumhydrogenphosphat MgHPO₄, Trimagnesiumphosphat Mg₃(PO₄)₂, Magnesiumdiphosphat Mg₂P₂O₇, Magnesiumkaliumphosphat MgKPO₄ und andere.

Nach einer bevorzugten Ausführungsform des erfindungsgemäßen Verfahrens wird sowohl Magnesiumoxid als auch mindestens eine Magnesiumphosphatverbindung zugesetzt. Magnesiumhydrogenphosphat wird besonders bevorzugt; die Verwendung einer entsprechenden MgHPO₄-Lösung hat den Vorteil einer besseren und verläßlicheren Dosierbarkeit.

Das zur Fällungsreaktion vorzugebende MgöPöN-Verhältnis (Atomgewichtsbasis) ist erfindungsgemäß für den Grad der Ammoniumfällung mitentscheidend und sollte vorzugsweise bei (1,05-1,35):1:(0,8-1,2) liegen. Wenn eine möglichst weitgehende Ammoniumfällung erwünscht ist, sollte das Verhältnis nahe dem stöchiometrischen Mg-P-NH₄-Verhältnis von etwa 1:1:1 eingestellt werden. Der Magnesiumanteil kann jedoch auch höher gestellt werden, beispielsweise bis zu einem 3fachen Überschuß über das stöchiometrische Verhältnis hinaus, damit ein möglichst hoher Ammoniumanteil durch Magnesiumammoniumphosphat gefällt wird und das Filtrat noch einen erhöhten Magneisumgehalt aufweist, der dann dem Hauptstrom einer Kläranlage zugeleitet und dort nach entsprechendem Phosphat- und Ammoniumangebot zur CAFR-Fällung von Magnesiumammoniumphosphat verwendet werden kann.

Der günstigste pH-Wert für die simultane Ammoniumfällung liegt im Bereich von 8,0 bis 9,5 und bevorzugt bei 8,5 bis 9,2.

Im allgemeinen wird dem zu entwässernden Schlamm auch ein Flockungsmittel zugesetzt, das polyelektrolytischen Charakter besitzt und vorzugsweise aus der Reihe der bekannten organischen polymeren Polyelektrolyte mit kationischen Gruppen ausgewählt ist. Das Molekulargewicht dieses Polyelektrolyten sollte relativ hoch liegen und bevorzugt mindestens 750.000 betragen. Besonders geeignete Polyelektrolyte sind in dieser Hinsicht Acrylamid-Copolymere, die aus der Gruppe der Acrylamid-Polymeren mit den Comonomeren Acrylsäure, Methacrylsäure, Acrylatsalze, Methacrylatsalze, Acrylsäureester (bevorzugt mit Alkanolen mit 1 bis 4 Kohlenstoffatomen) und entsprechenden Methacrylsäureester, N-substituierten Acrylamide und Meth-acrylamide, und/oder Diallyldimethyl-ammoniumchlorid oder -dimethylsulfat ausgewählt werden.

Eine andere Gruppe von Polyelektrolyten kationischer Natur liegt mit den Polyaminen und Polyethyleniminen vor.

Die Zugabemenge des Polyelektrolyten liegt vorzugsweise in einem Bereich, der einer Dosierrate von 100 bis 1.000 g/m³ Schlamm und bevorzugt 200 bis 500 g/m³ Schlamm entspricht.

Die erfindungsgemäße Fällungsreaktion erfolgt zweckmäßigerweise in einem Reaktor, der sich vor dem Entwässerungsaggregat befindet. Die Verweildauer des Flüssigschlamms in diesem Reaktor wird bevorzugt auf 5 bis 120 min und vorzugsweise auf 30 bis 60 min eingestellt.

Die Erfindung wird im folgenden anhand einiger Beispiele näher erläutert.

### Beispiel 1

In einer Kammerfilterpresse (KFP) wurde Klärschlamm entwässert, der zuvor mit 10 kg/m³ Branntkalk (CaO) und 10 kg/m³ Eisen(II)-chlorid (FeCl₂) konditioniert worden war. Dabei entstehen die entsprechenden Hydroxide, die zu einer Verbesserung des Klärschlammentwässerung führen, Der pH-Wert des Schlammes steigt jedoch auf etwa 12 an, und es entwickelt sich Ammoniakgas. Der Ammoniumgehalt im Filtrat beträgt 900 mg/l. Das ammoniumreiche Filtrat gelangt in die Kläranlage zurück und belastet dort die biologische Abwasserreinigung.

In einem Parallelversuch wurde der Klärschlamm erfindungsgemäß mit 6,5 kg/m³ Magnesia (MgO) und 8,0 kg/m³ Magphos® konditioniert. Magphos ist eine wäßrige Magnesiumhydrogenphosphat-Lösung. Zusätzlich wurden 0,4 kg/m³ kationischer Polyelektrolyt als 0,2%ige Lösung zur Flockulation zugegeben.

Dieser so vorkonditionierte Klärschlamm wurde in der KFP anschließend entwässert. Durch die Konditionierung stellte sich ein pH-Wert von 9,1 ein, so daß sich Magnesiumammoniumphosphat bilden konnte. Die folgende Gegenüberstellung läßt die Vorteile des erfindungsgemäßen Verfahrens gegenüber der konventinellen Fahrweise klar erkennen:

| Fahrweise mit | Ca | MgO |
|---|---|---|
| Preßzeit | 120 min | 90 min |
| Filterkuchen | 38 % TS | 42 % TS |
| Filtrat | klar | klar |
| Ammoniumgehalt im Filtrat (mg NH₄/l) | 900 | 320 |
| pH-Wert des Filtrats | > 12 | 9,1 |
| Geruch | Ammoniak | kein Ammoniak |

### Beispiel 2

Klärschlamm wurde mit 10 kg/m³ MgO und 12 kg/m³ Magphos sowie 0,4 kg/m³ kationischem Polyelektrolyt konditioniert. Wie in Beispiel 1 konnte die Entwässerung wesentlich verbessert und die Preßzeit reduziert werden. Der Ammoniumgehalt im Filtrat betrug nur noch 80 mg/l.

Je nach Zugabemenge von Magnesia und Magphos konnte der Ammoniumgehalt im Filtrat wesentlich reduziert werden. Neben der verbesserten Entwässerung wird auch das Nährstoffverhältnis im entwässerten Klärschlamm verbessert. Ein zusätzlicher Vorteil besteht darin, daß sich bei der Klärschlammkonditionierung kein Ammoniakgas entwickelte.

### Beispiel 3

Das erfindungsgemäße Verfahren wurde im großtechnischen Maßstab erprobt.

Die Klärschlämme aus verschiedenen Klärwerken werden in einer zentralen Entwässerungsstation mit Kammerfilterpressen entwässert.

Pro Monat werden ca. 10.000 m³ Dünnschlamm mit ca. 2,5 % TS zu 1.100 to Filterkuchen mit ca. 40 % TS verpreßt. Zur Konditionierung wurden bisher ca. 13 kg/m³ Branntkalk und 12 kg/m³ Eisenchlorid zugegeben. Der Filterkuchen wird deponiert (Kosten 200 DM/t). Pro Arbeitstag fallen etwa 450 bis 500 m³ Filtrate an, die einem Klärwerk zugeführt werden und aufgrund des hohen Ammoniumgehaltes bisher zu einer starken Belastung führen. Die Ammoniumkonzentration in den Filtraten der zentralen Entwässerungsstation schwankt zwischen 600 und 1.200 mg/l Ammonium-Stickstoff. Die mittlere Fracht beträgt etwa 450 kg/Tag. Die hohe Ammoniumfracht behindert die biologische Abwasserreinigung. Es kann zu Störungen bei der Nitrifikation kommen. Eine Denitrifikaiton ist wegen der ungünstigen Nährstoff-Konstellation nur mit einem erheblichen baulichen und betrieblichen Aufwand sicherzustellen.

Um die Ammoniumfracht zu reduzieren, wurde die erfindungsgemäße Ammoniumfällung in die Schlammkonditionierung integriert, so daß bereits im Klärschlamm Ammoniumgehalte als Magnesiumammoniumphosphat gefällt wurden.

Die Versuche erfolgen im wesentlichen mit einer KFP (Modell HAKU, 1986), für die folgende Daten galten:

| | |
|---|---|
| Filterfläche | 0,4 m² |
| Filterplatten | 25 x 25 cm |
| Filterkuchen | 4 Stück, 20 mm dick |
| Presseninhalt | 3,2 Liter |
| Beschickung | 500 l / m² . h |
| Flockungsmittel | Inlineflockung, Saugseite |
| Pressendruck | bis 12 bar |
| Preßzeit | 60 min. |

Als Fällungschemikalien wurden Magphos® mit NaOH, MgO allein, MgO in Kombination mit Magphos® mit und ohne NaOH angewendet.

Die Ergebnisse der Schlammkonditionierung sind in der folgenden Tabelle I zusammengefaßt:

| Versuche 17 - 41 Schlammkonditionierung mit MgO, Magphos® + NaOH | | | | | | | |
|---|---|---|---|---|---|---|---|
| Filtrat | MgO | Magphos® | NaOH | pH | mg/l | | |
| | | | | | NH4-N | P ges. | Mg |
| 10 | ohne | 17 g/l | 14 g/l | 9,2 | 390 | 5,1 | 35 |
| 11 | ohne | 26 g/l | 17 g/l | 9,1 | 220 | 9,1 | 37 |
| 23 | ohne | 30 g/l | 20 g/l | 9,1 | 120 | 1,8 | 42 |
| 13 | 13 g/l | 25 g/l | 4 g/l | 9,0 | 150 | 2,4 | 1300 |
| 15 | ohne | 26 g/l | 17 g/l | 9,0 | 250 | 8,7 | 29 |
| 16 | 5 g/l | ohne | ohne | 9,1 | 920 | 1,7 | 365 |
| 17 | 5 g/l | *17 g/l | 12 g/l | 9,5 | 155 | 6,0 | 115 |
| 18 | 5 g/l | * 7 g/l | ohne | 9,0 | 450 | 1,0 | 755 |
| 19 | 10 g/l | *15 g/l | ohne | 9,2 | 170 | 3,4 | 1600 |
| 26 | 5 g/l | 12 g/l | ohne | 9,1 | 500 | 1,0 | 1100 |
| 27 | 5 g/l | *12 g/l | ohne | 9,3 | 400 | 1,3 | 1200 |
| 30 | 7 g/l | *17 g/l | ohne | 9,0 | 119 | 5,5 | 1400 |
| 31 | 8 g/l | *10 g/l | ohne | 9,0 | 270 | 3,4 | 1050 |
| 39 | 10 g/l | 17 g/l | ohne | 9,7 | 540 | 4,0 | 900 |

| | | | | | | | |
|---|---|---|---|---|---|---|---|
| * = Magphos-20®, sonst Magphos-30® (ca. 7 Gew.-% Mg, 8 Gew-% P) | | | | | | | |

Die Resultate der Versuche 10, 11, 23 und 15 zeigen, dass die simultane Ammoniumfällung mit Magphos-30® und Natronlauge, ähnlich wie bei der Filtratbehandlung nach dem CAFR-Verfahren möglich ist. Die entsprechenden Entwässerungsversuche ergaben folgendes Bild:

| **Versuche** | Polymer kg/t TS | Filtrat Note | % TR |
|---|---|---|---|
| KFP 5, Filtrat 10: | 19 | 1,5 | 43,0 |
| KFP 6, Filtrat 11: | 21 | 1,3 | 41,7 |
| KFP 7, Filtrat 15: | 20 | 1,3 | 40,7 |

Die Fällung konnte ohne Probleme im Schlamm durchgeführt werden, die Reaktionszeit betrug jeweils ca. 30 Minuten. Es zeigte sich ein sehr gutes Entwässerungsverhalten mit einem hohen TS im Filterkuchen, der sich sehr gut vom Filtertuch ablöste.

In einer zweiten Versuchsserie konnte erarbeitet werden, dass zur Alkalisierung und Konditionierung auch Magnesia (MgO) geeignet ist (Versuche 17,18,19,26,27,30,31).

| **Versuche** | Polymer kg/t TS | Filtrat Note | % TR |
|---|---|---|---|
| KFP 8, Filtrat 17: | 19 | 1,3 | 39,7 |
| KFP 9, Filtrat 18: | 16 | 1,6 | 40,3 |
| KFP 10, Filtrat 19: | 17 | 1,4 | 40,0 |
| KFP 19, Filtrat 26: | 9 | 1,6 | 39,0 |
| KFP 20, Filtrat 27: | 14 | 1,5 | 40,3 |
| KFP 21, Filtrat 31: | 15 | 1,4 | 41,1 |

Die Fällung konnte auch hier ohne Probleme durchgeführt werden, die Reaktionszeit betrug jeweils ca. 60 Minuten. Es zeigte sich ein sehr gutes Entwässerungsverhalten mit einem hohen TS im Filterkuchen, der sich ebenfalls sehr gut vom Tuch ablöste.

Eine vollständige Ammoniumelimination durch Simultanfällung wäre zwar möglich, erscheint bei hohem Ammoniumgehalt jedoch nicht sinnvoll, weil wertvolles Fällungsprodukt mit dem entwässerten Schlamm verloren geht. Sinnvoll ist eine kombinierte Fahrweise, wobei die Ammoniumkonzentration auf etwa 400 mg/l halbiert und der Rest nach dem CAFR-Verfahren gefällt wird.

## Patentansprüche

1. Verfahren zur gleichzeitigen Ammoniumfällung und Entwässerung von Flüssigschlamm durch Behandlung des Schlammes mit Fällungszusätzen,
dadurch **gekennzeichnet,** daß der Schlamm durch direkte Zugabe eines Fällungszusatzes, der eine oder mehrere Magnesiumverbindungen sowie erforderlichenfalls ein oder mehrere Phosphate enthält, konditioniert wird unter Ausfällung der Ammoniumgehalte in Form von Magnesiumammoniumphosphat, und daß der so konditionierte Schlamm auf einem Entwässerungsaggregat entwässert wird unter Bildung eines Filtrats mit verminderter Nährstofffracht, das in eine Kläranlage eingeleitet wird, und eines entwässerten Schlammes mit erhöhtem Nährstoffangebot, der abgezogen wird.

2. Verfahren nach Anspruch 1, dadurch gekennzeichnet, daß der Fällungszusatz eine oder mehrere Magnesiumphosphatverbindungen enthält.

3. Verfahren nach Anspruch 1 oder 2, dadurch gekennzeichnet, daß der Fällungszusatz Magnesiumoxid und/oder Magnesiumhydroxid enthält.

4. Verfahren nach einem der Ansprüche 1 bis 3, dadurch gekennzeichnet, daß der Fällungszusatz Magnesiumoxid und mindestens eine Magnesiumphosphatverbindung enthält.

5. Verfahren nach einem der Ansprüche 1 bis 4, dadurch gekennzeichnet, daß der Fällungszusatz Magnesiumphosphat in Form einer Magnesiumhydrogenphosphat-Lösung enthält.

6. Verfahren nach einem der Ansprüche 1 bis 5, dadurch gekennzeichnet, daß der Fällungszusatz Magnesiumkaliumphosphat enthält.

7. Verfahren nach einem der Ansprüche 1 bis 6, dadurch gekennzeichnet, daß der Fällungszusatz Magnesiumhydrogenphosphat enthält und vorzugsweise in Form eines Feststoffes oder einer Aufschlämmung verwendet wird.

8. Verfahren nach einem der Ansprüche 1 bis 7, dadurch gekennzeichnet, daß zur Durchführung der Fällungsreaktion ein Mg:P:N-Atomverhältnis von (1,05-1,35):1:(0,8-1,2) eingestellt wird.

9. Verfahren nach einem der Ansprüche 1 bis 8, dadurch gekennzeichnet, daß der Fällungszusatz so zugegeben wird, daß sich ein stöchiometrisches Mg:P:NH₄-Verhältnis von etwa 1:1:1 ergibt.

10. Verfahren nach einem der Ansprüche 1 bis 7, dadurch gekennzeichnet, daß ein bis zu 3-facher Mg-Überschuß angewendet wird, so daß nach der Abtrennung des entwässerten Feststoffes ein Filtrat mit vermindertem Ammoniumgehalt und erhöhtem Mg-Gehalt erhalten wird, aus dem durch Phosphat- und Ammoniumangebot im Hauptstrom der Kläranlage Magnesiumammoniumphosphat ausgefällt werden kann.

11. Verfahren nach einem der Ansprüche 1 bis 10, dadurch gekennzeichnet, daß der pH-Wert des Fällungsreaktionssystems auf 8,0 bis 9,5 und bevorzugt auf 8,5 bis 9,2 eingestellt wird.

12. Verfahren nach einem der Ansprüche 1 bis 11, dadurch gekennzeichnet, daß dem zu behandelnden Schlamm zusätzlich ein Polyelektrolyt zugegeben wird.

13. Verfahren nach Anspruch 12, dadurch gekennzeichnet, daß ein organischer Polyelektrolyt zugegeben wird.

14. Verfahren nach Anspruch 12 oder 13, dadurch gekennzeichnet, daß ein Polyelektrolyt mit einem Molekulargewicht von mindestens 750 000 zugegeben wird.

15. Verfahren nach einem der Ansprüche 12 bis 14, dadurch gekennzeichnet, daß ein kationischer Polyelektrolyt zugegeben wird.

16. Verfahren nach einem der Ansprüche 12 bis 15, dadurch gekennzeichnet, daß ein Polyacrylamidcopolymer-Polyelektrolyt aus der Gruppe der Acrylamid-Polymeren mit den Comonomeren Acrylsäure, Methacrylsäure, Acrylatsalze, Methacrylatsalze, Acrylsäureester, Methacrylsäureester, N-substituierte Acrylamide und Methacrylamide und/oder DADMAC (Diallyldimethylammoniumchlorid oder -sulfat) zugegeben wird.

17. Verfahren nach einem der Ansprüche 12 bis 16, dadurch gekennzeichnet, daß als Polyelektrolyt ein Polyamin zugegeben wird.

18. Verfahren nach einem der Ansprüche 12 bis 16, dadurch gekennzeichnet, daß der Polyelektrolyt in einer Dosierrate von 100 bis 1000 g/m³ Schlamm und vorzugsweise in einer Dosierrate von 200 bis 500 g/m³ Schlamm zugegeben wird.

19. Verfahren nach einem der Ansprüche 1 bis 18, dadurch gekennzeichnet, daß der behandelte Flüssigschlamm einen Feststoffgehalt von 2 bis 10 Gew.-% hat.

20. Verfahren nach einem der Ansprüche 1 bis 19, dadurch gekennzeichnet, daß die Fällungsreaktion in einem Reaktor vor dem Entwässerungsaggregat eingeleitet wird.

21. Verfahren nach einem der Ansprüche 1 bis 20, dadurch gekennzeichnet, daß als Entwässerungsaggregat eine Kammerfilterpresse, ein Vakuumfilter, eine Siebbandpresse, eine Zentrifuge oder ein Hydrozyklon verwendet wird.

22. Verfahren nach einem der Ansprüche 1 bis 21, dadurch gekennzeichnet, daß die mittlere Verweildauer des Flüssigschlamms in dem Reaktor auf 5 bis 120 min und bevorzugt auf 30 bis 60 min eingestellt wird.

23. Verfahren nach einem der Ansprüche 1 bis 22, dadurch gekennzeichnet, daß als Flüssigschlamm ein Klärschlamm verwendet wird.

24. Verwendung des nach einem der Verfahren der Ansprüche 1 bis 23 gewonnenen Flüssigschlamm-Konzentrats als Bodenverbesserer.

25. Verwendung des nach einem der Verfahren der Ansprüche 1 bis 23 gewonnenen Flüssigschlamm-Konzentrats als Düngemittel, gegebenenfalls unter Anreicherung mit zusätzlichen Magnesium- und/oder Kalium-Düngemittelkomponenten.

## Claims

1. A process for the simultaneous ammonium precipitation and dewatering of liquid sludge by treating the sludge with precipitation additives, **characterized** in that the sludge is conditioned by direct addition of a precipitation additive containing one or more magnesium compounds as well as optionally one or more phosphates to precipitate ammonium contents in the form of magnesium ammonium phosphate and that the so conditioned sludge is dewatered on a dewatering device to form a filtrate having a decreased nutrient load, the filtrate being passed into a sewage works and the dewatered sludge having an increased nutrient load being removed.

2. The process according to claim 1, characterized in that the precipitation additive contains one or more magnesium phosphate compounds.

3. The process according to claim 1 or 2, characterized in that the precipitation additive contains magnesium oxide and/or magnesium hydroxide.

4. The process according to any of claims 1 to 3, characterized in that the precipitation additive contains magnesium oxide and at least one magnesium phosphate compound.

5. The process according to any of claims 1 to 4, characterized in that the precipitation additive contains magnesium phosphate in the form of a magnesium hydrogenphosphate solution.

6. The process according to any of claims 1 to 5, characterized in that the precipitation additive contains magnesium potassium phosphate.

7. The process according to any of claims 1 to 6, characterized in that the precipitation additive contains magnesium hydrogenphosphate and preferably is used in the form of a solid or a slurry.

8. The process according to any of claims 1 to 7, characterized in that for carrying out the precipitation reaction the Mg:P:N atom ratio is adjusted to (1,05-1,35):1:(0,8-1,2).

9. The process according to any of claims 1 to 8, characterized in that the precipitation additive is added in such manner that a stoichiometric Mg:P:NH₄ ratio of about 1:1:1 is obtained.

10. The process according to any of claims 1 to 7, characterized in that a up to three-fold Mg excess is used so that after the separation of the dewatered solid a filtrate having a decreased ammonium content and an increased Mg content is obtained from which magnesium ammonium phosphate can be precipitated by offering phosphate and ammonium in the mainstream of the sewage works.

11. The process according to any of claims 1 to 10, characterized in that the pH value of the precipitation reaction system is adjusted to a value of from 8,0 to 9,5 and preferably from 8,5 to 9,2.

12. The process of any of claims 1 to 11, characterized in that in addition a polyelectrolyte is added to the sludge to be treated.

13. The process according to claim 12, characterized in that an organic polyelectrolyte is added.

14. The process according to claim 12 or 13, characterized in that a polyelectrolyte having a molecular weight of at least 750 000 is added.

15. The process according to any of claims 12 to 14, characterized in that a cationic polyelectrolyte is added.

16. The process according to any of claims 12 to 15, characterized in that a polyacrylamide copolymer polyelectrolyte selected from the group of the acrylamide polymers with acrylic acid, methacrylic acid, acrylate salts, methacrylate salts, acrylic esters, methacrylic esters, N-substituted acrylamides and methacrylamides and/or DADMAC (diallyldimethyl ammonium chloride oder sulfate) as comonomers is added.

17. The process according to any of claims 12 to 16, characterized in that a polyamine is added as a polyelectrolyte.

18. The process according to any of claims 12 to 16, characterized in that the polyelectrolyte is added in a dosage rate of from 100 to 1000 g/m³ of sludge, preferably in a dosage rate of from 200 to 500 g/m³ of sludge.

19. The process according to any of claims 1 to 18, characterized in that the treated liquid sludge has a solid content of from 2 to 10 percent by weight.

20. The process according to any of claims 1 to 19, characterized in that the precipitation reaction in a reactor is initiated before a dewatering device.

21. The process according to any of claims 1 to 20, characterized in that a chamber filter press, a vacuum filter, a sieve ribbon press, a centrifuge or a hydrocyclone is used as the dewatering device.

22. The process according to any of claims 1 to 21, characterized in that the average residence time of the liquid sludge in the reactor is adjusted to from 5 to 120 min and preferably from 30 to 60 min.

23. The process according to any of claims 1 to 22, characterized in that a sewage sludge is used as a liquid sludge.

24. The use of the liquid sludge concentrate obtained in the process of any of claims 1 to 23 as a soil improver.

25. The use of the liquid sludge concentrate obtained in the process of any of claims 1 to 23 as a fertilizer, optionally enriched with additional magnesium and/or potassium fertilizer components.

## Revendications

1. Procédé pour la précipitation d'ammonium et la déshydratation de boue liquide simultanées par traitement de la boue avec des additifs de précipitation, caractérisé en ce que la boue est conditionnée par addition directe d'un additif de précipitation contenant un ou plusieurs composés de magnésium ainsi que, si nécessaire, un ou plusieurs phosphates, en précipitant les contenus en ammonium sous forme de phosphate d'ammonium-magnésium, et que la boue ainsi conditionnée est déshydratée sur un dispositif de déshydratation en formant un filtrat avec une charge réduite de substances nutritives qui est introduit dans une station d'épuration, et une boue déshydratée avec une charge élevée de substances nutritives, qui est séparée.

2. Procédé selon la revendication 1, caractérisé en ce que l'additif de précipitation contient un ou plusieurs composés de phosphate de magnésium.

3. Procédé selon la revendication 1 ou 2, caractérisé en ce que l'additif de précipitation contient de l'oxyde de magnésium et/ou de l'hydroxyde de magnésium.

4. Procédé selon l'une des revendications 1 à 3, caractérisé en ce que l'additif de précipitation contient de l'oxyde de magnésium et au moins un composé de phosphate de magnésium.

5. Procédé selon l'une des revendications 1 à 4, caractérisé en ce que l'additif de précipitation contient du phosphate de magnésium sous forme d'une solution de hydrophosphate de magnésium.

6. Procédé selon l'une des revendications 1 à 5, caractérisé en ce que l'additif de précipitation contient du phosphate de potassium-magnésium.

7. Procédé selon l'une des revendications 1 à 6, caractérisé en ce que l'additif de précipitation contient du hydrophosphate de magnésium et qu'il est de préférence utilisé sous forme d'un solide ou d'une décantation (slurry).

8. Procédé selon l'une des revendications 1 à 7, caractérisé en ce que pour l'exécution de la réaction de précipitation, le rapport atomique Mg:P:N est ajusté à (10,5-1,35):1:(0,8-1,2).

9. Procédé selon l'une des revendications 1 à 8, caractérisé en ce que l'additif de précipitation est ajouté de telle façon qu'on obtient un rapport stoechiométrique Mg:P:NH₄ d'environ 1:1:1.

10. Procédé selon l'une des revendications 1 à 7, caractérisé en ce que jusqu'à un triple surplus de Mg est utilisé pour obtenir, après la séparation du solide déshydraté, un filtrat avec un contenu réduit d'ammonium et un contenu élevé de Mg, duquel on peut précipiter du phosphate de magnésium-ammonium par une offre de phosphate et d'ammonium dans le flux principal de la station d'épuration.

11. Procédé selon l'une des revendications 1 à 10, caractérisé en ce que le pH du système de réaction de précipitation est réglé entre 8,0 et 9, 5 et de préférence entre 8,5 et 9,2.

12. Procédé selon l'une des revendications 1 à 11, caractérisé en ce qu'on ajoute en outre un polyélectrolyte à la boue à traiter.

13. Procédé selon la revendication 12, caractérisé en ce qu'on ajoute un polyélectrolyte organique.

14. Procédé selon la revendication 12 ou 13, caractérisé en ce qu'on ajoute un polyélectrolyte ayant un poids moléculaire d'au moins 750 000.

15. Procédé selon l'une des revendications 12 à 14, caractérisé en ce qu'on ajoute un polyélectrolyte cationique.

16. Procédé selon l'une des revendications 12 à 15, caractérisé en ce qu'on ajoute un polyélectrolyte d'un copolymère de polyacrylamide choisi du groupe des polymères d'acrylamide avec les co-monomères acide acrylique, acide méthacrylique, sels acryliques, sels méthacryliques, esters d'acide acrylique, esters d'acide méthacrylique, des acrylamides et méthacrylamides N-substitués et/ou DADMAC (chlorure ou sulfure de diallyldiméthylammonium).

17. Procédé selon l'une des revendications 12 à 16, caractérisé en ce qu'en tant que polyélectrolyte on ajoute un polyamine.

18. Procédé selon l'une des revendications 12 à 16, caractérisé en ce que le polyélectrolyte est ajouté dans un dosage de 100 à 1000 g/m³ de boue et de préférence dans un dosage de 200 à 500 g/m³ de boue.

19. Procédé selon l'une des revendications 1 à 18, caractérisé en ce que la boue liquide traitée a un contenu en solide entre 2 et 10 % en poids.

20. Procédé selon l'une des revendications 1 à 19, caractérisé en ce que la réaction de précipitation est initiée dans un réacteur devant le dispositif de déshydratation.

21. Procédé selon l'une des revendications 1 à 20, caractérisé en ce qu'on utilise en tant que dispositif de déshydratation une presse de filtre de chambre, un filtre à vide, une presse à bande criblée, une centrifugeuse ou un hydrocyclone.

22. Procédé selon l'une des revendications 1 à 21, caractérisé en ce que la durée moyenne de séjour de la boue liquide dans le réacteur est ajustée à 5 à 120 minutes et de préférence à 30 à 60 minutes.

23. Procédé selon l'une des revendications 1 à 22, caractérisé en ce qu'on utilise une boue d'épuration en tant que boue liquide.

24. Utilisation du concentré de boue liquide obtenu selon l'une des revendications 1 à 23 en tant qu'agent d'amélioration de sol.

25. Utilisation du concentré de boue liquide obtenu selon l'une des revendications 1 à 23 en tant qu'engrais, le cas échéant enrichi avec des composants supplémentaires d'engrais de magnésium et/ou de potassium.
